# FASCICULE DE BREVET EUROPEEN

(11) **EP 1 942 719 B1**
(45) Date de publication et mention de la délivrance du brevet: **11.04.2012**
(21) Numéro de dépôt: 06831286.7
(22) Date de dépôt: 24.10.2006
(51) Int. Cl.: A01D 78/10

(54) **MACHINE DE FENAISON**
HEUERNTEMASCHINE
HAYING MACHINE

(30) Priorité: 28.10.2005 FR 0553298
(43) Date de publication de la demande: 16.07.2008
(73) Titulaire: KUHN S.A., 67706 Saverne Cedex (FR)
(72) Inventeur: QUIRIN, Michel, 67310 Allenwiller (FR)
(74) Mandataire: Andres, Jean-Claude
(86) Numéro de dépôt international: PCT/FR2006/051092
(87) Numéro de publication internationale: WO 2007/048970

(56) Documents cités:
- EP-A- 0 772 970
- EP-A- 1 353 083
- EP-A- 1 495 667
- DE-A1- 2 832 425
- DE-A1-102004 051 678

## Description

La présente invention se rapporte à une machine de fenaison, notamment une faneuse, comportant un bâti constitué par une structure longitudinale plus ou moins centrale qui est destinée à être reliée à un tracteur et une structure transversale qui est munie de plusieurs rotors de fanage sensiblement identiques qui sont montés rotatifs sur des axes centraux et qui possèdent des bras porte-outils dirigés sensiblement radialement, lesdits rotors s'appuyant au sol au moyen de roues porteuses durant le travail, laquelle structure transversale comporte des parties latérales déployables dans une position de travail et repliables dans une position de transport autour d'axes sensiblement verticaux.

Sur les machines connues de ce genre, le repliage maximal dans la position de transport est atteint lorsque les bras porte-outils des rotors des deux parties latérales se rencontrent. La largeur de la machine est alors réduite, mais cette largeur reste tributaire de facteurs tels que la longueur et le nombre de bras porte-outils des rotors.

La faneuse décrite dans le document DE 28 32 425 possède une structure transversale qui est munie de rotors et qui comporte des parties latérales déployables dans une position de travail et repliables dans une position de transport autour d'axes sensiblement verticaux. Lesdites parties latérales peuvent être immobilisées dans différentes positions par rapport à la partie centrale de la structure au moyen de verrous qui peuvent s'engager dans des encoches prévues dans des tôles d'arrêt qui sont montées sur les axes fixes des rotors de ladite partie centrale de la structure. Ces verrous n'assurent ainsi qu'une fonction de blocage des parties latérales de la structure transversale et des rotors correspondants dans leurs différentes positions.

La présente invention a pour but de proposer une machine sur laquelle la largeur en position de transport peut être réduite davantage pour faciliter les déplacements.

A cet effet, une importante caractéristique de l'invention consiste en ce que la machine comporte des moyens de positionnement des rotors autour de leurs axes centraux respectifs lors du repliage des parties latérales en position de transport.

De cette manière il est possible de placer les rotors dans une position dans laquelle les bras porte-outils des rotors des deux parties latérales peuvent davantage s'engager les uns entre les autres lors du repliage en vue de réduire la largeur. Il est en sus possible de tenir compte de la position des roues d'appui des rotors et de faire en sorte que leurs bras porte-outils puissent aller au-delà desdites roues lors du repliage en position de transport.

Selon l'invention, les moyens de positionnement peuvent être constitués par un doigt agissant sur un rotor pour le placer dans une position appropriée au repliage tel que décrit ci-dessus. Ce doigt peut être déplaçable au moyen d'un vérin hydraulique. Ledit rotor peut comporter une couronne avec des crans coopérant avec le doigt pour le placement du rotor.

D'autres caractéristiques et avantages de l'invention ressortiront de la description qui va suivre et qui se réfère aux dessins annexés qui représentent, à titre d'exemple non limitatif, une forme de réalisation d'une machine selon l'invention.

Dans ces dessins :
- la figure 1 représente une machine selon l'invention en position de travail,
- la figure 2 représente une vue de détail de la machine en position de travail,
- la figure 3 représente une vue de détail similaire à la figure 2, avec le moyen de positionnement selon l'invention actionné,
- la figure 4 représente une machine selon l'invention en position de transport.

Telle qu'elle est représentée sur les figures annexées, la machine selon l'invention est une faneuse comportant un bâti (1) constitué essentiellement par une structure longitudinale (2) plus ou moins centrale et une structure transversale (3). La structure longitudinale (2) comporte à son extrémité avant une tête d'attelage (4) destinée à être reliée à un tracteur servant à animer la machine et à la déplacer dans une direction d'avancement (A). Elle comporte en sus des roues de transport (5) réglables en hauteur par rapport au sol.

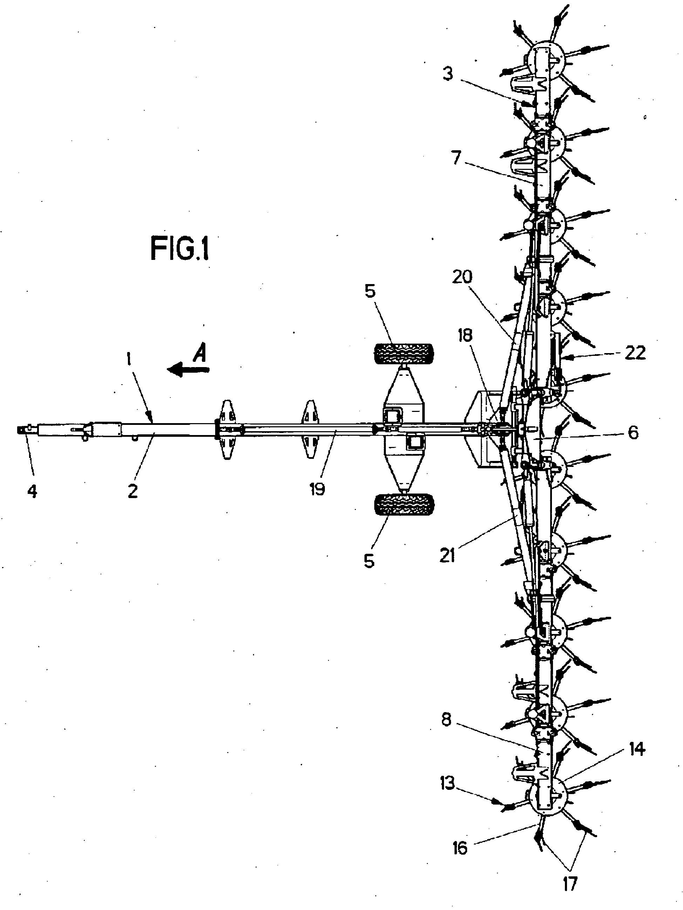

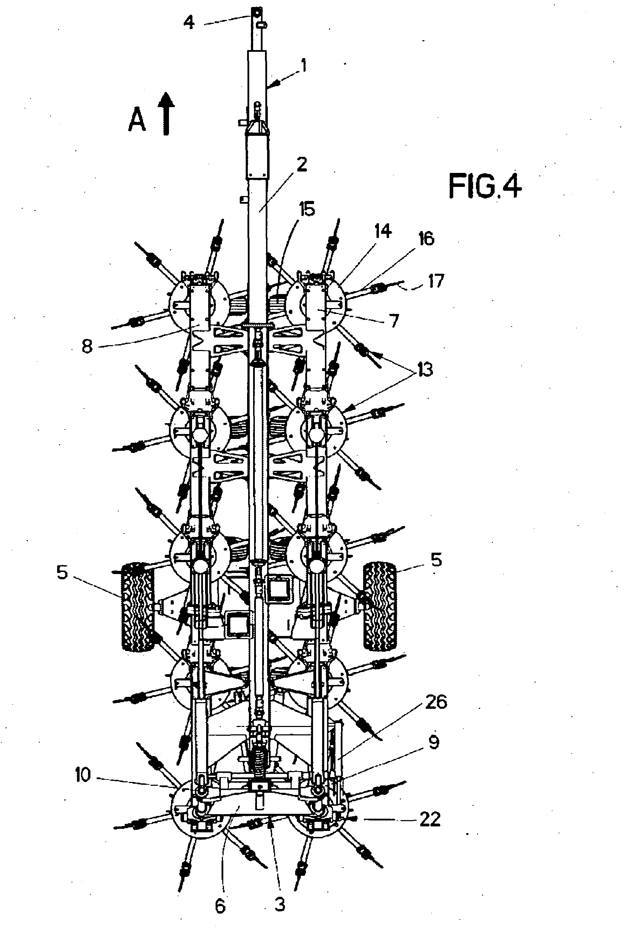

La structure transversale (3) est reliée à l'extrémité arrière de la structure longitudinale (2). Elle comporte une partie centrale (6) et deux parties latérales (7 et 8) qui sont articulées sur ladite partie centrale (6) au moyen d'axes sensiblement verticaux (9 et 10). Ces parties latérales (7 et 8) sont déplaçables autour de ces axes (9 et 10) à l'aide de vérins hydrauliques (11 et 12). Ceux-ci permettent ainsi de déployer les deux parties (7 et 8) dans une position de travail où elles sont sensiblement perpendiculaires à la direction d'avancement (A) (figures 1 à 3) et de les replier vers l'avant dans une position de transport (figure 4) pour réduire la largeur de la machine. Selon une variante non représentée, il est également possible de les replier vers l'arrière pour réduire la largeur au transport.

Chaque partie latérale (7 et 8) porte cinq rotors (13) tandis que la partie centrale (6) n'en porte aucun. La machine représentée comporte ainsi au total dix rotors (13). Ce nombre n'est donné qu'à titre indicatif et peut varier en fonction de la largeur de travail recherchée. Les rotors de fanage (13) sont sensiblement identiques. Chacun possède un moyeu (14) qui est monté rotatif sur un axe central sensiblement vertical qui porte à son extrémité inférieure une roue (15) d'appui au sol. Ledit moyeu (14) est muni de bras (16) qui s'étendent sensiblement radialement vers l'extérieur et qui portent des fourches de travail (17). Les bras porte-fourches (16) de chaque rotor (13) pénètrent légèrement dans les intervalles entre les bras porte-fourches (16) des rotors (13) voisins afin d'obtenir un recouvrement des trajectoires de leurs fourches (17) durant le travail.

Les rotors (13) peuvent être entraînés en rotation par paires en convergence à l'avant, autour de leurs axes centraux respectifs, à partir de l'arbre de prise de force du tracteur. A cet effet, le bâti (1) porte un carter de distribution (18) qui est relié par différents arbres de transmission (19) audit arbre de prise de force. Dudit carter (18) le mouvement d'entraînement est transmis par des arbres intermédiaires (20 et 21) à des arbres de transmission qui sont logés dans les parties latérales (7 et 8) de la structure transversale (3). Au niveau de chaque rotor (13), ces arbres de transmission portent des pignons qui sont en prise avec des roues dentées solidaires des moyeux (14) et qui assurent ainsi un entraînement synchrone de tous les rotors (13).

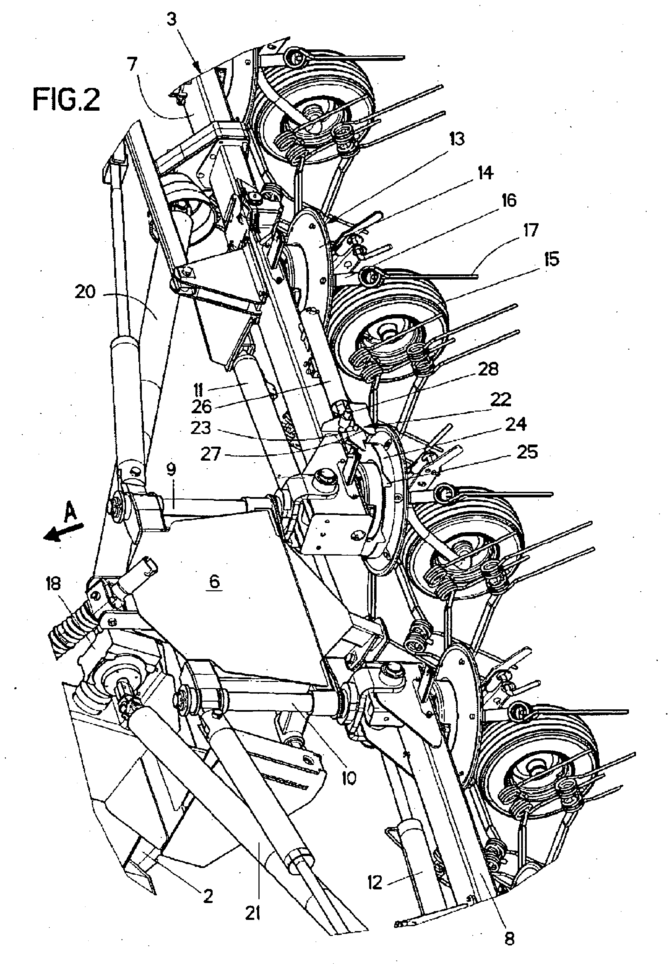

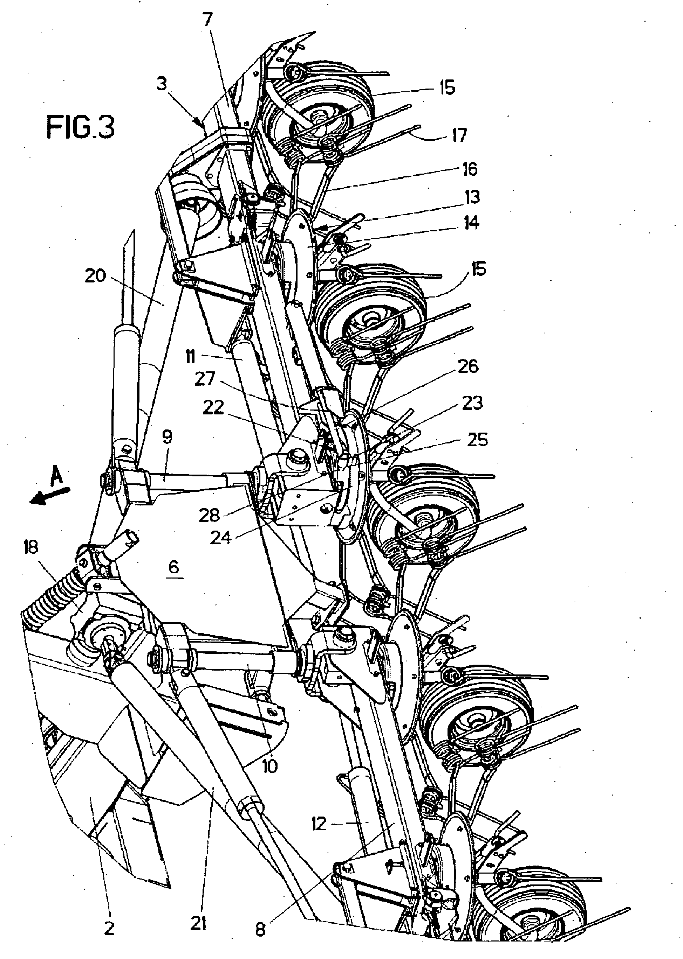

Tel que cela ressort notamment des figures 2 et 3, la machine comporte des moyens de positionnement (22) des rotors (13) autour de leurs axes centraux respectifs lors du repliage en position de transport des parties latérales (7 et 8). Ces moyens (22) sont constitués par un doigt (23) agissant sur un rotor (13) et par une couronne (24) avec plusieurs crans (25) qui est solidaire du moyeu (14) dudit rotor (13). Ces moyens (22) permettent de placer les rotors (13) dans une position appropriée au repliage pour le transport. Ledit doigt (23) est lié à la tige d'un vérin hydraulique (26) qui est articulé sur la structure transversale (3). Il est en sus guidé sur une rampe inclinée (27) qui est également reliée à la structure transversale (3). A cet effet, le doigt (23) comporte des patins (28) qui glissent sur la rampe (27) lorsqu'il est déplacé au moyen du vérin hydraulique (26).

Au travail, la machine est déplacée dans le sens d'avancement (A), les deux parties latérales (7 et 8) déployées perpendiculairement audit sens (A).

Les rotors (13) sont alors entraînés en rotation de sorte que leurs fourches (17) ramassent, sur les parties avant de leurs trajectoires, les produits couchés sur le sol et les étalent à nouveau à l'arrière tout en provoquant leur retournement afin d'accélérer leur séchage.

Pour le repliage des parties latérales (7 et 8) en position de transport, le doigt (23) est déplacé vers l'avant au moyen du vérin hydraulique (26) qui est commandé pour qu'il s'allonge. Les patins (28) descendent alors la partie inclinée de la rampe (27) et permettent au doigt (23) de se loger dans un cran (25) de la couronne (24). Ledit doigt exerce alors une poussée sur le rotor (13) et le fait tourner autour de son axe central jusque dans une position recherchée dans laquelle ses bras porte-outils (16) peuvent pénétrer davantage dans les intervalles entre les bras porte-outils (16) des rotors (13) voisins c'est-à-dire une position dans laquelle ils ne butent pas contre lesdits bras (16) ou même contre les roues d'appui (15) de ces rotors (13) voisins lors du repliage (voir figure 3). On notera que tous les rotors (13) de la machine sont positionnés simultanément en raison de leur liaison avec les arbres de transmission qui assurent leur entraînement en rotation durant le travail. Il est alors possible de déplacer les parties latérales (7 et 8) vers l'avant autour des axes (9 et 10) et de les rapprocher considérablement l'une de l'autre, au moyen des vérins hydrauliques (11 et 12) commandés de telle sorte qu'ils se raccourcissent. La largeur de la machine peut alors être nettement inférieure à la largeur, en position de travail, des deux rotors (13) voisins situés près du centre de la structure transversale (3) de la machine. Les moyens de positionnement (22) assurent aussi le blocage des rotors (13) dans cette position recherchée tant que les parties latérales (7 et 8) sont en position de transport.

Pour le retour en position de travail, les parties latérales (7 et 8) sont déployées à l'aide des vérins hydrauliques (11 et 12) et le doigt (23) est éloigné de la couronne (24) au moyen du vérin hydraulique (26) et de la rampe (27) de façon à libérer les rotors (13) (figure 2).

La commande du vérin hydraulique (26) déplaçant le doigt (23) peut être combinée avec celle des vérins hydrauliques (1 et 12) déplaçant les parties latérales (7 et 8) de la position de travail en position de transport et vice versa. Les opérations consistant à positionner les rotors (13) autour de leurs axes centraux respectifs lors de la mise en position de transport et à les libérer lors du retour en position de travail s'effectuent alors automatiquement lorsque ces parties latérale (7 et 8) sont déplacées.

Il est bien évident que l'invention n'est pas limitée au mode de réalisation décrit ci-dessus et représenté sur les dessins annexés. Des modifications restent possibles notamment en ce qui concerne la constitution ou le nombre des divers éléments ou par substitution d'équivalents techniques, sans pour autant sortir du domaine de protection tel que défini dans les revendications.

## Revendications

1. Machine de fenaison, notamment une faneuse, comportant un bâti (1) constitué par une structure longitudinale (2) plus ou moins centrale qui est destinée à être reliée à un tracteur et une structure transversale (3) qui est munie de plusieurs rotors de fanage (13) sensiblement identiques qui sont montés rotatifs sur des axes centraux et qui possèdent des bras porte-outils (16) dirigés sensiblement radialement, lesdits rotors de fanage (13) s'appuyant au sol au moyen de roues porteuses (15) durant le travail, laquelle structure transversale (3) comporte des parties latérales (7 et 8) déployables dans une position de travail et repliables dans une position de transport autour d'axes sensiblement verticaux (9 et 10), *c**aractérisée par le fait*** qu'elle comporte des moyens de positionnement (22) des rotors (13) autour de leurs axes centraux respectifs lors du repliage des parties latérales (7 et 8) en position de transport.

2. Machine selon la revendication 1, ***caractérisée par le fait* que** les moyens de positionnement (22) sont constitués par un doigt (23) agissant sur un rotor (13).

3. Machine selon la revendication 2, ***caractérisée par le fait* que** le rotor (13) comporte une couronne (24) avec des crans (25) coopérant avec le doigt (23) pour placer les rotors (13) dans une position appropriée lors du repliage.

4. Machine selon la revendication 2, ***caractérisée par le fait* que** le doigt (23) est déplaçable au moyen d'un vérin hydraulique (26).

5. Machine selon la revendication 4, ***caractérisée par le fait* que** le vérin hydraulique (26) est relié à la structure transversale (3).

6. Machine selon l'une quelconque des revendications 2 à 4, ***caractérisée par le fait* que** le doigt (23) est guidé sur une rampe inclinée (27).

7. Machine selon la revendication 6, ***caractérisée par le fait* que** la rampe inclinée (27) est reliée à la structure transversale (3).

8. Machine selon la revendication 6, ***caractérisée par le fait* que** chaque doigt (23) comporte au moins un patin (28) s'appuyant sur la rampe (27).

9. Machine selon la revendication 4, ***caractérisée par le fait* que** la commande du vérin hydraulique (26) déplaçant le doigt (23) est combinée avec la commande des vérins hydrauliques (11 et 12) déplaçant les parties latérales (7 et 8) en position de travail et en position de transport.

10. Machine selon l'une quelconque des revendications précédentes, *c**aractérisée par le fait*** que les moyens de positionnement (22) bloquent les rotors (13) autour de leurs axes centraux respectifs dans la position de transport.

## Claims

1. Haymaking machine, in particular a tedder, comprising a frame (1) constituted by a more or less central longitudinal structure (2) which is intended to be connected to a tractor and a transverse structure (3) which is provided with several substantially identical tedding rotors (13) which are rotatably mounted on central axes and which have substantially radially directed tool-carrier arms (16), said tedding rotors (13) resting on the ground by means of support wheels (15) during work, which transverse structure (3) comprises lateral parts (7 and 8) which can be unfolded into a work position and folded into a transport position about substantially vertical axes (9 and 10), ***characterized in* that** it comprises positioning means (22) of the rotors (13) about their respective central axes on folding of the lateral parts (7 and 8) into the transport position.

2. Machine according to Claim 1, ***characterized in* that** the positioning means (22) are constituted by a finger (23) acting on a rotor (13).

3. Machine according to Claim 2, ***characterized in* that** the rotor (13) comprises a crown (24) with notches (25) cooperating with the finger (23) to place the rotors (13) in a suitable position during folding.

4. Machine according to Claim 2, ***characterized in* that** the finger (23) is movable by means of a hydraulic jack (26).

5. Machine according to Claim 4, ***characterized in* that** the hydraulic jack (26) is connected to the transverse structure (3).

6. Machine according to any one of Claims 2 to 4, ***characterized in* that** the finger (23) is guided on an inclined slope (27).

7. Machine according to Claim 6, ***characterized in* that** the inclined slope (27) is connected to the transverse structure (3).

8. Machine according to Claim 6, ***characterized in* that** each finger (23) comprises at least one pad (28) resting on the slope (27).

9. Machine according to Claim 4, ***characterized in* that** the control of the hydraulic jack (26) moving the finger (23) is combined with the control of the hydraulic jacks (11 and 12) moving the lateral parts (7 and 8) into the work position and the transport positions.

10. Machine according to any one of the preceding claims, ***characterized in* that** the positioning means (22) lock the rotors (13) about their respective central axes in the transport position.

## Patentansprüche

1. Heuwerbungsmaschine, insbesondere Wender, mit einem Rahmen (1), der von einer mehr oder weniger zentralen, zur Anhängung an einen Traktor bestimmten Längsstruktur (2) und einer mit mehreren im Wesentlichen identischen Wenderotoren (13) versehenen Querstruktur (3) gebildet ist, wobei die Wenderotoren (13) drehbar auf zentralen Achsen montiert sind und im Wesentlichen radial ausgerichtete Werkzeugtragarme (16) umfassen, wobei die Wenderotoren (13) sich während der Arbeit mittels Tragrädern (15) auf den Boden stützen, wobei die Querstruktur (3) Seitenteile (7 und 8) umfasst, die um im Wesentlichen vertikale Achsen (9 und 10) in eine Arbeitsstellung ausfahrbar und in eine Transportstellung einfahrbar sind, ***dadurch gekennzeichnet,* dass** sie Positioniermittel (22) zur Positionierung der Rotoren (13) um ihre jeweiligen zentralen Achsen beim Einfahren der Seitenteile (7 und 8) in die Transportstellung umfasst.

2. Maschine nach Anspruch 1, ***dadurch gekennzeichnet,* dass** die Positioniermittel (22) von einem auf einen Rotor (13) einwirkenden Finger (23) gebildet sind.

3. Maschine nach Anspruch 2, ***dadurch gekennzeichnet,* dass** der Rotor (13) einen Kranz (24) mit mit dem Finger (23) zusammenwirkenden Auschnitten (25) umfasst, um die Rotoren (13) in eine geeignete Stellung beim Einfahren zu bringen.

4. Maschine nach Anspruch 2, ***dadurch gekennzeichnet,* dass** der Finger (23) mittels eines Hydraulikzylinders (26) verschiebbar ist.

5. Maschine nach Anspruch 4, ***dadurch gekennzeichnet, dass*** der Hydraulikzylinder (26) mit der Querstruktur (3) verbunden ist.

6. Maschine nach irgend einem der Ansprüche 2 bis 4, ***dadurch gekennzeichnet,* dass** der Finger (23) auf einer geneigten Rampe (27) geführt wird.

7. Maschine nach Anspruch 6, ***dadurch gekennzeichnet,* dass** die geneigte Rampe (27) mit der Querstruktur (3) verbunden ist.

8. Maschine nach Anspruch 6, ***dadurch gekennzeichnet,* dass** jeder Finger (23) mindestens eine sich auf die Rampe (27) stützende Kufe (28) umfasst.

9. Maschine nach Anspruch 4, ***dadurch gekennzeichnet,* dass** die Steuerung des Hydraulikzylinders (26), der den Finger (23) verschiebt, mit der Steuerung der Hydraulikzylinder (11 und 12), die die Seitenteile (7 und 8) in die Arbeits- und Transportstellungen verschieben, kombiniert ist.

10. Maschine nach irgend einem der vorhergehenden Ansprüche, *d****adurch gekennzeichnet,* dass** die Positioniermittel (22) die Rotoren (13) um ihre jeweiligen zentralen Achsen in die Transportstellung feststellen.
